# EUROPEAN PATENT APPLICATION

(11) **EP 2 960 802 A1**
(43) Date of publication of application: **30.12.2015**
(21) Application number: 13875443.7
(22) Date of filing: 04.12.2013
(51) Int. Cl.: G06F 13/00, H04M 11/00, H04W 4/00, H04W 84/12, H04W 84/20

(54) **DATA SHARING SYSTEM**

(30) Priority: 22.02.2013 JP 2013032835
(71) Applicant: NEC Corporation, Tokyo 108-8001 (JP)
(72) Inventor: KANNHAVONG, Bounpadith, Tokyo 108-8001 (JP); FUJITA, Norihito, Tokyo 108-8001 (JP); UEDA, Hirofumi, Tokyo 108-8001 (JP)
(74) Representative: MacDougall, Alan John Shaw
(86) International application number: PCT/JP2013/007110
(87) International publication number: WO 2014/128806

(57) **Abstract**

Individual communication terminals are connected to a communication network in which one communication terminal functions as a parent that has a relay function, the other communication terminals function as children, and transmitting and receiving of communication messages between child communication terminals are performed via the parent. Each communication terminal transmits a holding list that lists information about data that the own communication terminal holds, to other communication terminals. Further, each communication terminal temporarily stores holding lists received from other communication terminals. Each communication terminal, while it does not function as a parent, preferentially selects the holding list that does not match that of the own communication terminal and whose transmission source is the parent communication terminal, among the stored holding lists, and, while the own communication terminal functions as a parent, selects any holding list that does not match that of the own communication terminal. Each communication terminal transmits and receives communication messages with another communication terminal that is a transmission source of the selected holding list so that data sharing is performed.

## Description

### [Technical Field]

The present invention relates to a data sharing system, a data sharing method, a communication terminal, and a program wherein data are shared between a plurality of communication terminals capable of wirelessly communicating with one another.

### [Background Art]

As a type of method wherein data are shared between a plurality of communication terminals, there is a method in which data are shared in a distributed manner by individual communication terminals without using a central management apparatus such as a server.

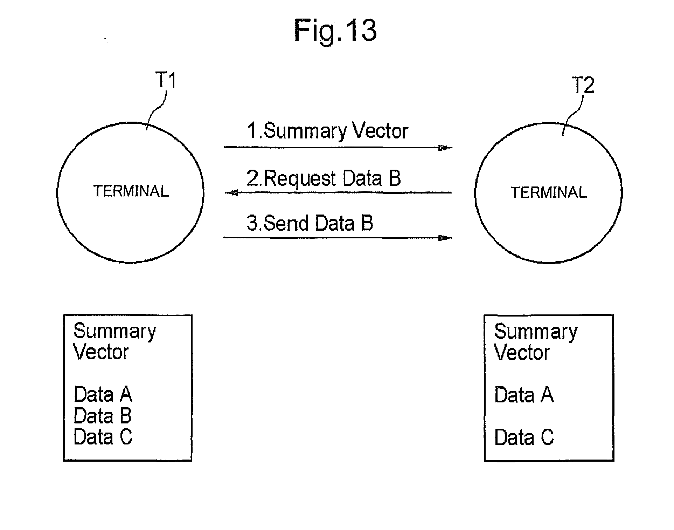

For example, exchange and synchronization of information held by each communication terminal by using an epidemic method while communication terminals move close to one another have been proposed as a first related technology related to the present invention (refer to, for example, NPL 1). In an epidemic method, as illustrated in Fig. 13, when a communication terminal in a network detects another communication terminal, the communication terminal and the other communication terminal exchange a holding list (also referred to as "summary vector") that lists data (content) held by the own communication terminal, so that the communication terminal acquires the content of the holding list held by the other communication terminal. Then, the communication terminal transmits and receives communication messages to and from another communication terminal holding a holding list that does not match the holding list of the own communication terminal so as to perform data sharing.

On the other hand, in a system that distributes content by using an overlay network logically formed on an IP network, a management server that manages, in a centralized manner, content holding status at each node has been proposed as a second related technology related to the present invention (refer to, for example, PTL 1). The management server in the second related technology, when acquiring a content request from a user terminal, selects a node having the smallest number of hops to the user terminal, among a plurality of nodes that hold the requested content, as a content distribution source node.

### [Citation List]

### [Patent Literature]

[PTL 1] Japanese Laid-open Patent Publication No. 2012-114649

### [Non Patent Literature]

[NPL 1] A. Vahdat, D. Becker, "Epidemic Routing for Partially-Connected Ad Hoc Networks, " Tech. Report CS-200006, Duke University, Apr. 2000

### [Summary of Invention]

### [Technical Problem]

In the aforementioned first related technology, each communication terminal, when receiving holding lists different from the holding list of the own communication terminal in succession from a plurality of other communication terminals, performs data exchange with one of the other communication terminals whose holding list is the earliest to be received, by transmitting and receiving communication messages to and from the other communication terminal. Therefore, there may be inefficient cases that, although another communication terminal with a smaller number of hops exists in a communication-available area of the own communication terminal, data exchange is performed with still another communication terminal with a larger number of hops. As indicated by the aforementioned second related technology, in a content distribution system in an IP-network, a node with the smallest number of hops to a user terminal can be selected among a plurality of nodes that hold the requested content, as a content distribution source node, by centrally managing content holding status at each node. However, in a system as indicated by the aforementioned first related technology in which data are shared in a distributed manner by individual communication terminals, it is impossible to centrally manage the data holding status at each communication terminal.

An object of the present invention is to provide a data sharing system that solves the aforementioned problem, in other words, the problem that each communication terminal, when receiving holding lists different from the holding list of the own communication terminal in succession from a plurality of other communication terminals, is subject to inefficient data exchange with a communication terminal with a large number of hops.

### [Solution to Problem]

A data sharing system according to a first aspect of the present invention is
a data sharing system in which data are shared between a plurality of communication terminals connected to a communication network in which, of the plurality of communication terminals, one communication terminal functions as a parent that has a relay function and the other communication terminals function as children that do not have the relay function, and transmitting and receiving of a communication message between the child communication terminals are performed via the parent,
each of the communication terminals including:
a communication unit that stores information related to the parent and controls enabling/disabling of the relay function of the own communication terminal in accordance with the stored parent-related information;
a data storage unit that stores one or more pieces of data;
a holding list transmission unit that transmits a holding list that lists information about data stored in the data storage unit to another of the communication terminals through use of the communication message; and
a data exchange unit that includes a holding list storage unit that temporarily stores the holding list received from another of the communication terminals, refers to the parent-related information in the communication unit, preferentially selects, while the own communication terminal does not function as the parent, the holding list that does not match the holding list of the own communication terminal and whose transmission source is the parent communication terminal, among the holding lists stored in the holding list storage unit, selects, while the own communication terminal functions as the parent, any of the holding lists that do not match the holding list of the own communication terminal among the holding lists stored in the holding list storage unit, and transmits and receives the communication message to and from the other communication terminal that is a transmission source of the selected holding list so that data sharing is performed.

A data sharing method according to a second aspect of the present invention is
a data sharing method in which data are shared between a plurality of communication terminals connected to a communication network in which, of the plurality of communication terminals, one communication terminal functions as a parent that has a relay function and the other communication terminals function as children that do not have the relay function, and transmitting and receiving of a communication message between the child communication terminals are performed via the parent, wherein:
each of the communication terminals transmits a holding list that lists information about data held by the own communication terminal to another of the communication terminals through use of the communication message; and
each of the communication terminals temporarily stores the holding list received from another of the communication terminals, preferentially selects, while the own communication terminal does not function as the parent, the holding list that does not match the holding list of the own communication terminal and whose transmission source is the parent communication terminal, among the stored holding lists, selects, while the own communication terminal functions as the parent, any of the holding lists that do not match the holding list of the own communication terminal among the stored holding lists, and transmits and receives the communication message to and from the other communication terminal that is a transmission source of the selected holding list so that data sharing is performed.

A communication terminal according to a third aspect of the present invention is
a communication terminal connected to a communication network in which, of a plurality of communication terminals, one communication terminal functions as a parent that has a relay function and the other communication terminals function as children that do not have the relay function, and transmitting and receiving of a communication message between the child communication terminals are performed via the parent, the communication terminal including:
a communication unit that stores information related to the parent and controls enabling/disabling of the relay function of the own communication terminal in accordance with the stored parent-related information;
a data storage unit that stores one or more pieces of data;
a holding list transmission unit that transmits a holding list that lists information about data stored in the data storage unit to another of the communication terminals through use of the communication message; and
a data exchange unit that includes a holding list storage unit that temporarily stores the holding list received from another of the communication terminals, refers to the parent-related information in the communication unit, preferentially selects, while the own communication terminal does not function as the parent, the holding list that does not match the holding list of the own communication terminal and whose transmission source is the parent communication terminal, among the holding lists stored in the holding list storage unit, selects, while the own communication terminal functions as the parent, any of the holding lists that do not match the holding list of the own communication terminal among the holding lists stored in the holding list storage unit, and transmits and receives the communication message to and from the other communication terminal that is a transmission source of the selected holding list so that data sharing is performed.

A data sharing method according to a fourth aspect of the present invention is
a data sharing method that is executed by a plurality of communication terminals connected to a communication network in which, of the plurality of communication terminals, one communication terminal functions as a parent that has a relay function and the other communication terminals function as children that do not have the relay function, and transmitting and receiving of a communication message between the child communication terminals are performed via the parent, wherein
the communication terminal:
includes a communication unit that stores information related to the parent and controls enabling/disabling of the relay function of the own communication terminal in accordance with the stored parent-related information, a data storage unit that stores one or more pieces of data, and a holding list storage unit;
receives, from another of the communication terminals, a holding list that lists information about data held by the other communication terminal and temporarily stores the holding list in the holding list storage unit;
refers to the parent-related information in the communication unit, preferentially selects, while the own communication terminal does not function as the parent, the holding list that does not match the holding list of the own communication terminal and whose transmission source is the parent communication terminal, among the holding lists stored in the holding list storage unit, and selects, while the own communication terminal functions as the parent, any of the holding lists that do not match the holding list of the own communication terminal among the holding lists stored in the holding list storage unit; and
transmits and receives the communication message to and from the other communication terminal that is a transmission source of the selected holding list so that data sharing is performed.

A program according to a fifth aspect of the present invention is
a program for causing a computer that constitutes each of a plurality of communication terminals connected to a communication network in which, of the plurality of communication terminals, one communication terminal functions as a parent that has a relay function and the other communication terminals function as children that do not have the relay function, and transmitting and receiving of a communication message between the child communication terminals are performed via the parent, to function as:
a communication unit that stores information related to the parent and controls enabling/disabling of the relay function of the own communication terminal in accordance with the stored parent-related information;
a data storage unit that stores one or more pieces of data;
a holding list transmission unit that transmits a holding list that lists information about data stored in the data storage unit to another of the communication terminals through use of the communication message; and
a data exchange unit that includes a holding list storage unit that temporarily stores the holding list received from another of the communication terminals, refers to the parent-related information in the communication unit, preferentially selects, while the own communication terminal does not function as the parent, the holding list that does not match the holding list of the own communication terminal and whose transmission source is the parent communication terminal, among the holding lists stored in the holding list storage unit, selects, while the own communication terminal functions as the parent, any of the holding lists that do not match the holding list of the own communication terminal among the holding lists stored in the holding list storage unit, and transmits and receives the communication message to and from the other communication terminal that is a transmission source of the selected holding list so that data sharing is performed.

### [Advantageous Effects of Invention]

The aforementioned configuration of the present invention enables each communication terminal, when receiving holding lists in succession that are different from the holding list of the own communication terminal from a plurality of other communication terminals, to perform data exchange with a communication terminal with a smaller number of hops.

### [Brief Description of Drawings]

[Fig. 1] Fig. 1 is a block diagram of a data sharing system according to a first exemplary embodiment of the present invention.
[Fig. 2] Fig. 2 is a block diagram of a communication terminal according to the first exemplary embodiment of the present invention.
[Fig. 3] Fig. 3 is a flowchart illustrating a data sharing procedure in the data sharing system according to the first exemplary embodiment of the present invention.
[Fig. 4] Fig. 4 is a diagram illustrating an example of a scene in which data are shared between a plurality of communication terminals according to the first exemplary embodiment of the present invention.
[Fig. 5] Fig. 5 is a diagram illustrating another example of a scene in which data are shared between a plurality of communication terminals according to the first exemplary embodiment of the present invention.
[Fig. 6] Fig. 6 is a block diagram of a data sharing system according to a second exemplary embodiment of the present invention.
[Fig. 7] Fig. 7 is a block diagram of a communication terminal according to the second exemplary embodiment of the present invention.
[Fig. 8] Fig. 8 is an explanatory diagram of a data exchange method in the data sharing system according to the second exemplary embodiment of the present invention.
[Fig. 9] Fig. 9 is a flowchart illustrating a data sharing procedure in the data sharing system according to the second exemplary embodiment of the present invention.
[Fig. 10] Fig. 10 is a diagram illustrating an example of a scene in which data are shared between a plurality of communication terminals according to the second exemplary embodiment of the present invention.
[Fig. 11] Fig. 11 is a diagram illustrating another example of a scene in which data are shared between a plurality of communication terminals according to the second exemplary embodiment of the present invention.
[Fig. 12] Fig. 12 is a block diagram of a communication terminal included in a data sharing system according to a sixth exemplary embodiment of the present invention.
[Fig. 13] Fig. 13 is a diagram illustrating an example of a procedure of data sharing by an epidemic method.

### [Description of Embodiments]

Next, exemplary embodiments of the present invention will be described in detail with reference to the drawings.

### [First Embodiment]

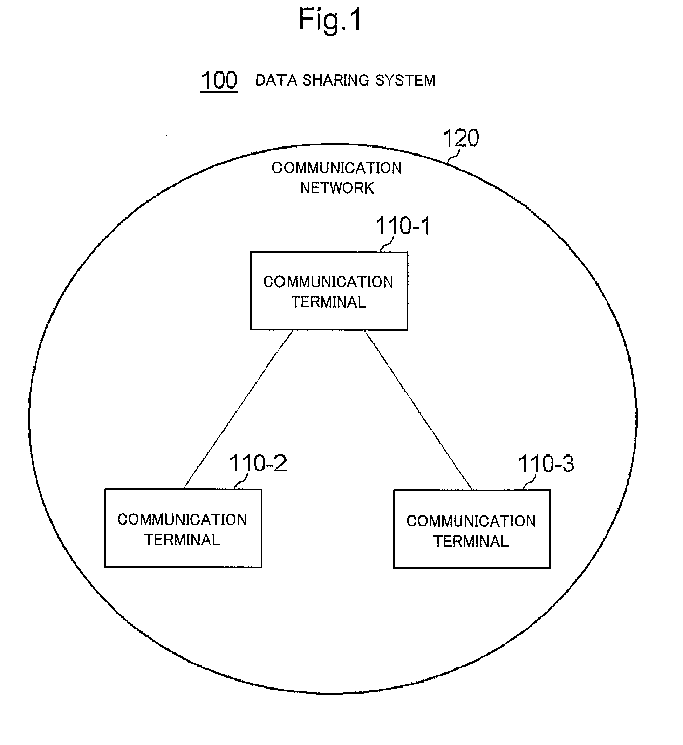

Referring to Fig. 1, in a data sharing system 100 according to a first exemplary embodiment of the present invention, a plurality of communication terminals 110 capable of wirelessly transmitting and receiving communication messages to and from one another form one communication network 120. As for the individual communication terminals 110, all of the terminals may be mobile communication terminals, or some of the terminals may be mobile communication terminals and the others may be fixed terminals. Although in Fig. 1 only three communication terminals are drawn, the number of communication terminals may be two or less or may also be four or more.

The communication network 120 has a hierarchized network topology. In the present exemplary embodiment, the network topology is made up of two hierarchies, a parent and a child, and, of the plurality of communication terminals 110 connected to the communication network 120, only one communication terminal 110 functions as a parent and all the other communication terminals 120 function as children. In the communication network 120, transmitting and receiving of communication messages between the child communication terminals 110 are performed via the parent communication terminal 110. In other words, the parent communication terminal 110 functions as an access point.

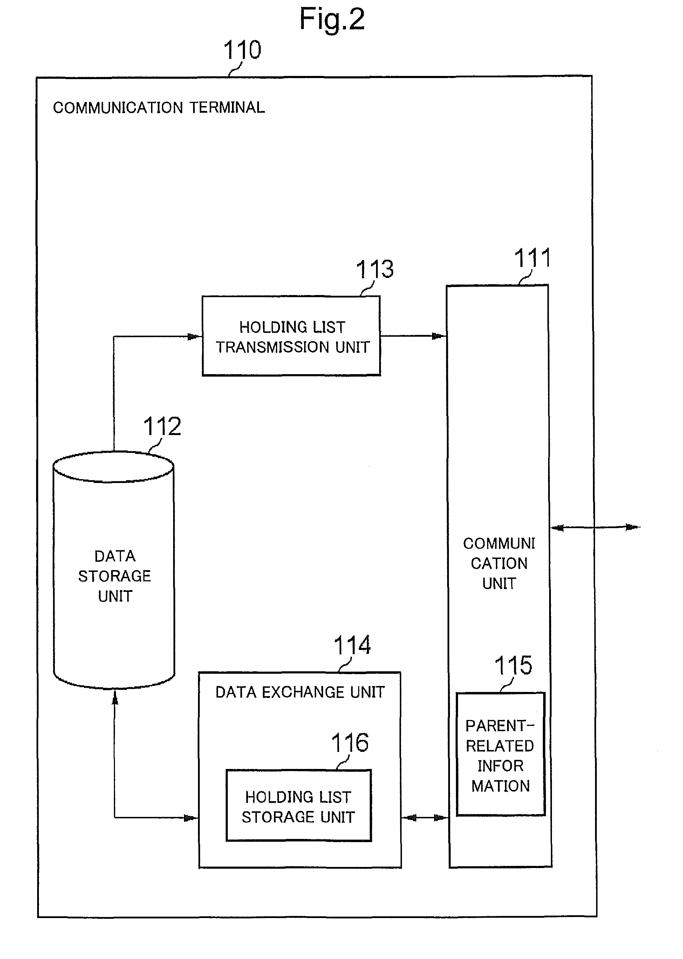

Fig. 2 illustrates a configuration example of a communication terminal 110. Referring to Fig. 2, the communication terminal 110 includes a communication unit 111, a data storage unit 112, a holding list transmission unit 113, and a data exchange unit 114.

The communication unit 111 has a function of wirelessly transmitting and receiving communication messages to and from other communication terminals 110. The communication unit 111 stores parent-related information 115 in the communication network 120, and controls enabling/disabling of a relay function in accordance with the parent-related information 115. Specifically, while the own communication terminal 110 is a parent communication terminal in the communication network 120, the communication unit 111 enables the relay function and relays communication from a child communication terminal 110 to another child communication terminal 110 in the communication network 120.

The data storage unit 112 stores one or more pieces of data. Choice of individual data is arbitrary. For example, the data may include any of text data, image data, and audio data, as well as mixture thereof. Further, the data may be what is called content.

The holding list transmission unit 113 has a function of transmitting a holding list that lists information about data stored in the data storage unit 112 to other communication terminals 110 through the communication unit 111. The information about data in the list is arbitrary as long as the data can be identified by the information, and, for example, the information may be a summary vector or may also be a data identifier. The holding list transmission unit 113 carries out transmission of a holding list, for example, in every fixed cycle.

The data exchange unit 114 has a function of transmitting and receiving communication messages to and from another communication terminal 110 through the communication unit 111 so as to perform data sharing. The data exchange unit 114 includes a holding list storage unit 116 that temporarily stores a holding list received from another communication terminal 110. How long holding lists in the past are to be stored in the holding list storage unit 116 is arbitrary, and the time may be a fixed period in the past or may also be variable. The data exchange unit

114 refers to the parent-related information 115 in the communication unit 111 and performs different operations depending on whether the own communication terminal 110 functions as a parent or not. While the own communication terminal 110 does not function as a parent, the data exchange unit 114 preferentially selects a holding list that does not match the holding list of the own communication terminal and whose transmission source is the parent communication terminal 110, among the holding lists stored in the holding list storage unit 116, and transmits and receives communication messages to and from another communication terminal 110 that is a transmission source of the selected holding list so as to perform data sharing. On the other hand, while the own communication terminal 110 functions as a parent, the data exchange unit 114 selects any holding list that does not match the holding list of the own communication terminal 110 among the holding lists stored in the holding list storage unit 116, and transmits and receives communication messages to and from another communication terminal 110 that is a transmission source of the selected holding list so as to perform data sharing.

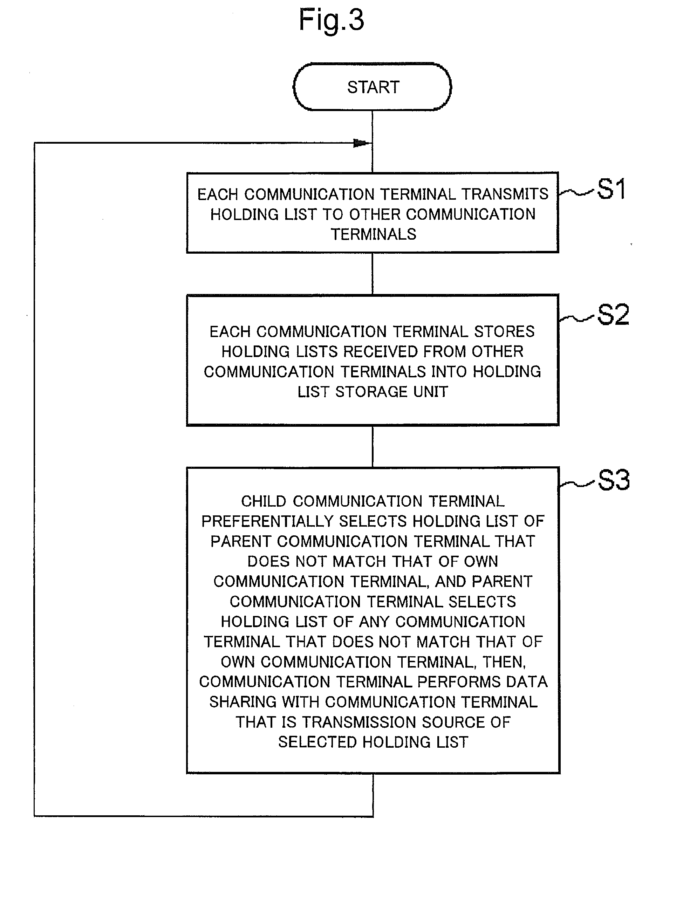

Next, in the data sharing system illustrated in Fig. 1, an operation in which each of the plurality of communication terminals 110 shares holding data with one another will be described with reference to a flowchart in Fig. 3.

Each communication terminal 110 in the data sharing system 100 transmits, using the holding list transmission unit 113, a holding list that lists data held by the own communication terminal to other communication terminals 110 through the communication unit 111 (Step S1).

Further, each communication terminal 110, when receiving a holding list from another communication terminal 110, temporarily stores the received holding list into the holding list storage unit 116 in the data exchange unit 114 (Step S2).

Then, each communication terminal 110 transmits and receives, using the data exchange unit 114, communication messages to and from another communication terminal 110 holding a holding list that does not match the holding list of the own communication terminal through the communication unit 111 so as to perform data sharing (Step S3). Specifically, a communication terminal 110 that does not function as a parent but as a child preferentially selects a holding list that does not match the holding list of the own communication terminal and whose transmission source is the parent communication terminal 110, among the holding lists stored in the holding list storage unit 116, by using the data exchange unit 114. Then, the communication terminal 110 that functions as a child transmits and receives, using the data exchange unit 114, communication messages to and from another communication terminal 110 that is a transmission source of the selected holding list so that data sharing is performed. Further, the communication terminal 110 that functions as a parent, using the data exchange unit 114, selects, among the holding lists stored in the holding list storage unit 116, any holding list that does not match the holding list of the own communication terminal 110. Then, the communication terminal 110 that functions as a parent transmits and receives, using the data exchange unit 114, communication messages to and from another communication terminal 110 that is a transmission source of the selected holding list so that data sharing is performed.

Subsequently, the processing of the steps S1 to S3 mentioned above is repeatedly performed.

By the aforementioned operation, data are shared between the plurality of communication terminals 110.

Next, the operation of the present exemplary embodiment will be more specifically described by taking, as an example, a case that, in the data sharing system illustrated in Fig. 1, of the three communication terminals 110 connected to the communication network 120, the communication terminal 110-1 functions as a parent and the communication terminals 110-2 and 110-3 function as children.

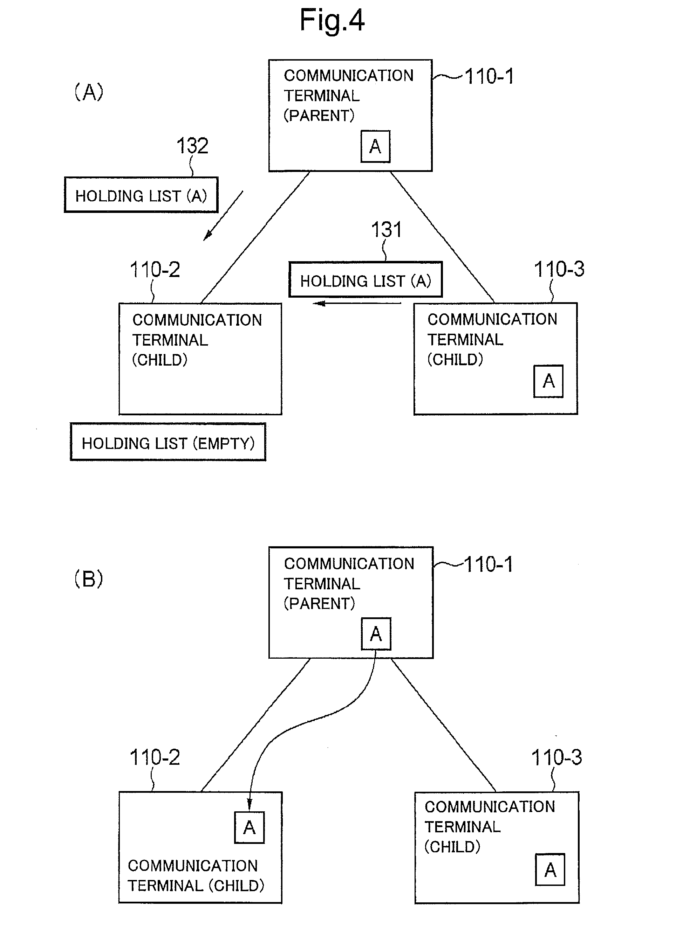

As illustrated in Fig. 4(A), it is assumed that the parent communication terminal 110-1 and the child communication terminal 110-3 hold the same data A and the child communication terminal 110-2 does not hold any data. It is assumed that, in this situation, the communication terminal 110-2 receives a holding list 131 from the communication terminal 110-3 and, immediately thereafter, receives a holding list 132 from the parent communication terminal 110-1.

The communication terminal 110-2 temporarily stores the holding lists 131 and 132 received in succession into the holding list storage unit 116. Then, the communication terminal 110-2, because of being a child communication terminal, preferentially selects the holding list 132 of the parent communication terminal 110-1 from the holding list storage unit 116. Then, the communication terminal 110-2 transmits and receives communication messages to and from the communication terminal 110-1 that is a transmission source of the selected holding list 132 so that data sharing is performed. As a result, as illustrated in Fig. 4(B), the communication terminal 110-2 acquires the data A not present in the own communication terminal from the parent communication terminal 110-1. Consequently, one-hop communication brings about a state in which all the communication terminals 110 share the same data A with one another.

In contrast, in case of the communication terminal 110-2 selects the holding list 131 received earlier and acquires the data A from the communication terminal 110-3 that is a transmission source of the selected holding list 131, two-hop communication is needed.

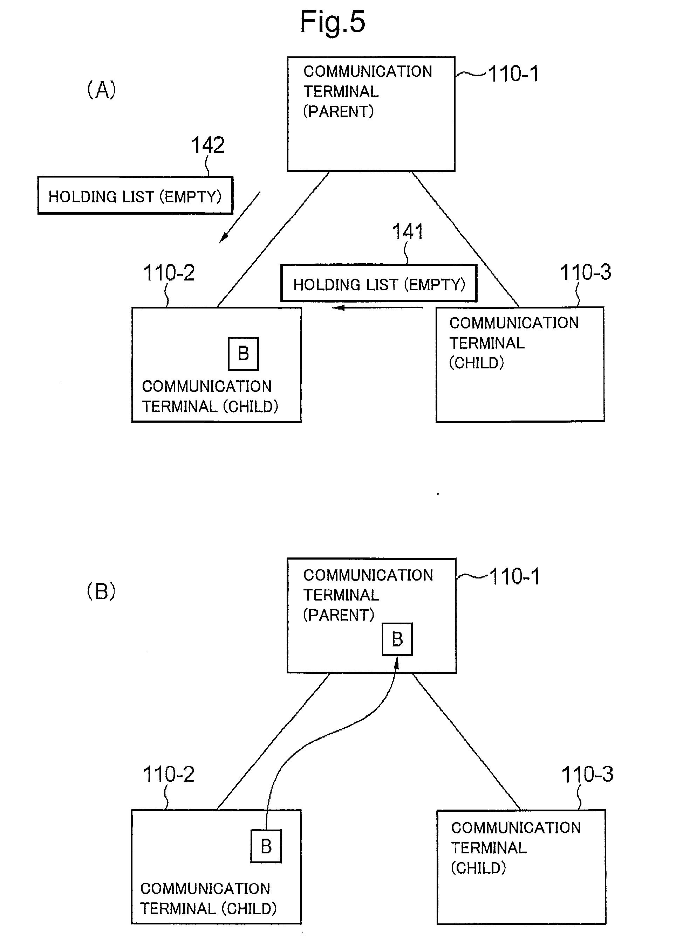

Further, it is assumed that, as illustrated in Fig. 5(A), the child communication terminal 110-2 holds data B and the parent communication terminal 110-1 and the child communication terminal 110-3 do not hold any data. It is assumed that, in this situation, the communication terminal 110-2 receives a holding list 141 from the communication terminal 110-3 and, immediately thereafter, receives a holding list 142 from the parent communication terminal 110-1.

The communication terminal 110-2 temporarily stores the holding lists 141 and 142 received in succession into the holding list storage unit 116. Then, the communication terminal 110-2, because of being a child communication terminal, preferentially selects the holding list 142 of the parent communication terminal 110-1 from the holding list storage unit 116. Then, the communication terminal 110-2 transmits and receives communication messages to and from the communication terminal 110-1 that is a transmission source of the selected holding list 142 so as to perform data sharing. As a result, as illustrated in Fig. 5(B), the communication terminal 110-2 provides the data B that the communication terminal 110-1 does not hold, for the communication terminal 110-1. Consequently, one-hop communication brings about a state in which the communication terminal 110-1 and the communication terminal 110-2 hold the same data B and the communication terminal 110-3 does not hold any data. This state is the same as the state illustrated in Fig. 4(A). Therefore, from the state illustrated in Fig. 5(B), one-hop communication brings about a state in which all the communication terminals 110 share the same data B with one another. Therefore, from the state in Fig. 5(A), performing one-hop communication twice brings about the state in which all the communication terminals 110 share the same data B with one another.

In contrast, in case of the communication terminal 110-2 selects the holding list 141 received earlier and provides the data B for the communication terminal 110-3 that is a transmission source of the selected holding list 141, two-hop communication is needed. Then, in order for the communication terminal 110-1 to subsequently acquire the data B from the communication terminal 110-2 or the communication terminal 110-3, another one-hop communication is needed. Therefore, communication of three hops in total is needed.

Thus, according to the present exemplary embodiment, each communication terminal, when receiving in succession holding lists different from the holding list of the own communication terminal from a plurality of other communication terminals, is able to perform data exchange with communication terminals with which the number of hops is smaller. A reason for this is that each communication terminal temporarily stores received holding lists, and, while the own communication terminal is not a parent, preferentially selects, among the stored holding lists, a holding list that does not match the holding list of the own communication terminal and whose transmission source is the parent communication terminal, and transmits and receives communication messages with another communication terminal that is a transmission source of the selected holding list so that data sharing is performed.

### [Second Embodiment]

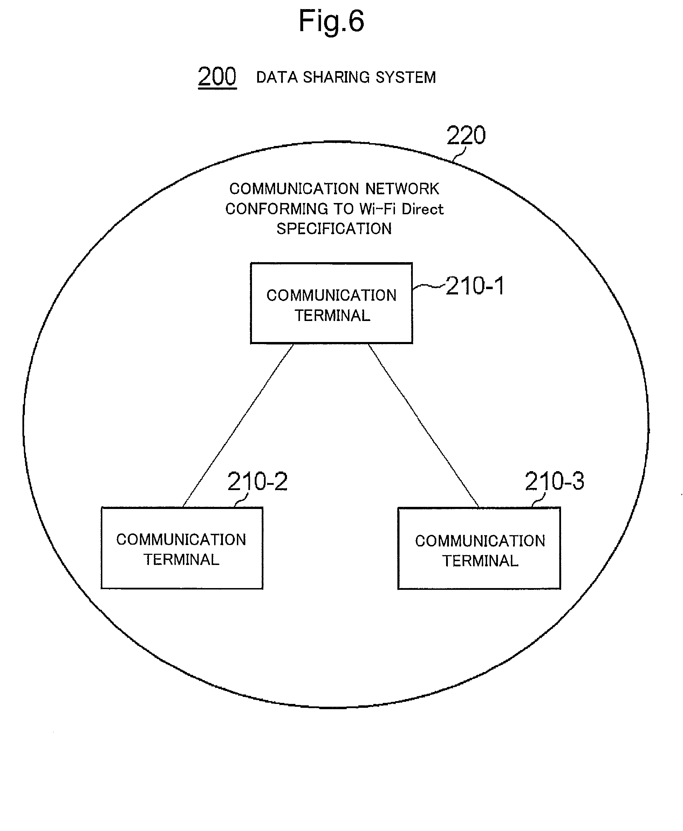

Referring to Fig. 6, in a data sharing system 200 according to a second exemplary embodiment of the present invention, a plurality of communication terminals 210 capable of wirelessly transmitting and receiving communication messages to and from one another form one communication network 220. As for the individual communication terminals 210, all of the terminals may be mobile communication terminals, or some of the terminals may be mobile communication terminals and the others may be fixed terminals. Although in Fig. 6 only three communication terminals are drawn, the number of communication terminals may be two or less, or may also be four or more.

The communication network 220 is a communication network that conforms to a Wi-Fi Direct specification. In a network that conforms to a Wi-Fi direct specification, only one communication terminal among a plurality of communication terminals participating in the network is selected as a group owner (parent) to function as an access point. Further, the aforementioned group owner is selected through negotiation among the plurality of communication terminals participating in the network.

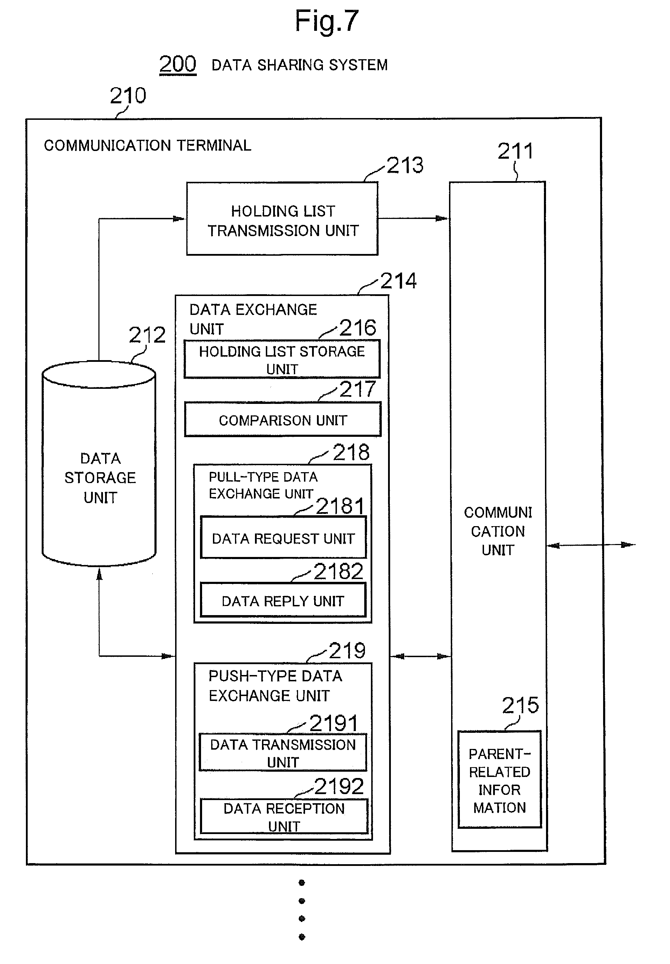

Fig. 7 illustrates a configuration example of a communication terminal 210. Referring to Fig. 7, the communication terminal 210 includes a communication unit 211, a data storage unit 212, a holding list transmission unit 213, and a data exchange unit 214.

The data storage unit 212 and the holding list transmission unit 213 have the same functions as the data storage unit 112 and the holding list transmission unit 113, respectively, of the communication terminal 110 according to the first exemplary embodiment illustrated in Fig. 2.

The communication unit 211 has a function of determining a group owner (parent) through negotiation with other communication terminals 210 and storing information 215 related to the determined parent. Further, the communication unit 211 controls enabling/disabling of a relay function in accordance with the parent-related information 215. Specifically, while the own communication terminal 210 is a parent communication terminal in the communication network 220, the communication unit 211 enables the relay function and relays communication from a child communication terminal 210 to another child communication terminal 210 in the communication network 220.

The data exchange unit 214 has a function of transmitting and receiving communication messages to and from another communication terminal 210 through the communication unit 211 so as to perform data sharing. The data exchange unit 214 includes a holding list storage unit 216, a comparison unit 217, a pull-type data exchange unit 218, and a push-type data exchange unit 219.

The holding list storage unit 216 has a function of temporarily storing a holding list received from another communication terminal 210.

The comparison unit 217 has a function of comparing a holding list received from another communication terminal 210 and stored in the holding list storage unit 216 with the holding list of the own communication terminal. Further, the comparison unit 217 has a function of determining, based on a result of the comparison and the parent-related information 215 stored in the communication unit 211, another communication terminal 210 to acquire data and a list of the data to be acquired, and another communication terminal 210 to provide data and a list of the data to be provided.

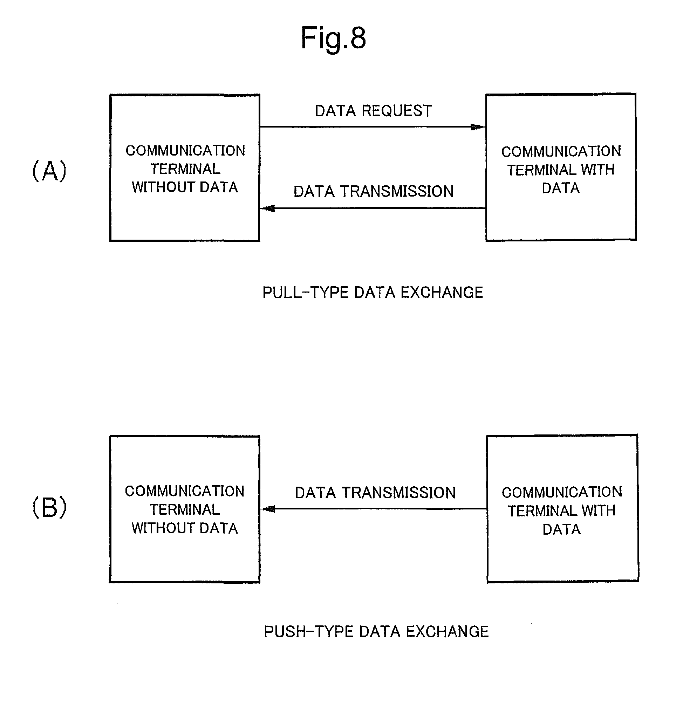

The pull-type data exchange unit 218, as illustrated in Fig. 8(A), has a function of performing data sharing between communication terminals by a method in which a communication terminal that does not hold data transmits a data request to another communication terminal that holds the data and the communication terminal that receives the data request transmits the data to the communication terminal that is a source of the request. The pull-type data exchange unit 218 includes a data request unit 2181 and a data reply unit 2182. The data request unit 2181 has a function of receiving, from the comparison unit 217, another communication terminal 210 to acquire data and a list of the data to be acquired. Further, the data request unit 2181 has a function of making a request for data to another communication terminal 210 through the communication unit 211, receiving, through the communication unit 211, the data transmitted from the other communication terminal 210 through use of a communication message in response to the request, and storing the data into the data storage unit 212. On the other hand, the data reply unit 2182 has a function of reading out, from the data storage unit 212, data requested by the pull-type data exchange unit 218 of another communication terminal 210 through use of a communication message and transmitting the data to the other communication terminal 210 through the communication unit 211.

The push-type data exchange unit 219, as illustrated in Fig. 8(B), has a function of performing data exchange between communication terminals by a method in which a communication terminal that holds data transmits data to another communication terminal that does not hold the data without a data request from the other communication terminal. The push-type data exchange unit 219 includes a data transmission unit 2191 and a data reception unit 2192. The data transmission unit 2191 has a function of receiving, from the comparison unit 217, another communication terminal 210 to provide data and a list of the data to be provided. Further, the data transmission unit 2191 has a function of reading out data to be provided from the data storage unit 212 and transmitting the data to another communication terminal 210 through the communication unit 211. On the other hand, the data reception unit 2192 has a function of storing, into the data storage unit 212, data received from the push-type data exchange unit 219 of another communication terminal 210 through use of a communication message.

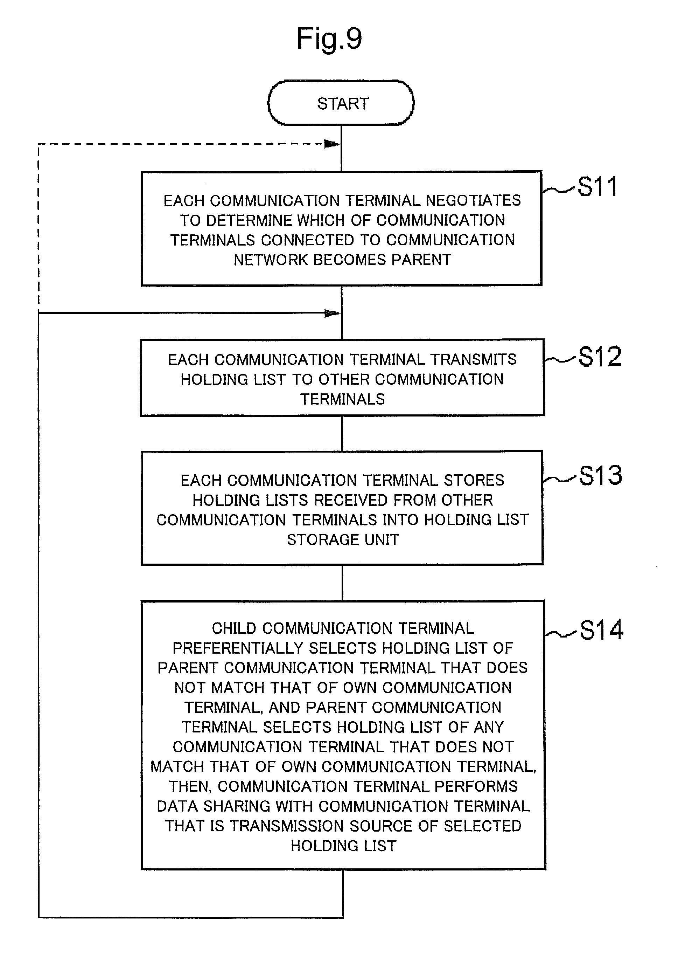

Next, in the data sharing system 200 according to the present exemplary embodiment, an operation in which each of a plurality of communication terminals 210 shares respective holding data with one another will be described with reference to a flowchart in Fig. 9.

In case of data sharing is performed in the data sharing system 200, first, each communication terminal 210 negotiates, using the communication unit 211, with other communication terminals 210 as to which communication terminal of the communication terminals connected to the communication network 220 is determined as a parent (Step S11). As a result of the negotiation, information 215 related to the determined parent is temporarily stored in the communication unit 211.

Next, each communication terminal 210 transmits, using the holding list transmission unit 213, a holding list that lists data held by the own communication terminal to other communication terminals 210 through the communication unit 211 (Step S12).

Further, each communication terminal 210, when receiving a holding list from another communication terminal 210, temporarily stores the received holding list in the holding list storage unit 216 in the data exchange unit 214 (Step S13).

Then, each communication terminal 210 transmits and receives, using the data exchange unit 214, communication messages through the communication unit 211 to and from another communication terminal 210 holding a holding list that does not match the holding list of the own communication terminal, so as to perform data sharing (Step S14). At this time, each communication terminal 210 that functions as a child preferentially selects a holding list that does not match the holding list of the own communication terminal and whose transmission source is the parent communication terminal 210, among the holding lists stored in the holding list storage unit 216. Then, each communication terminal 210 that functions as a child performs the pull-type data exchange and/or the push-type data exchange with the other communication terminal 210 that is a transmission source of the selected holding list. Further, the communication terminal 210 that functions as a parent selects any holding list that does not match the holding list of the own communication terminal 210 among the holding lists stored in the holding list storage unit 216. Then, the communication terminal 210 that functions as a parent performs the pull-type data exchange and/or the push-type data exchange with the other communication terminal 210 that is a transmission source of the selected holding list.

Subsequently, the processing of the aforementioned steps S12 to S13 is repeated. Alternatively, in a case that the parent communication terminal 210 departs from the communication network 220, or the like, the processing of the aforementioned steps S11 to S 14 may be repeated.

By the aforementioned operation, data are shared between the plurality of communication terminals 210.

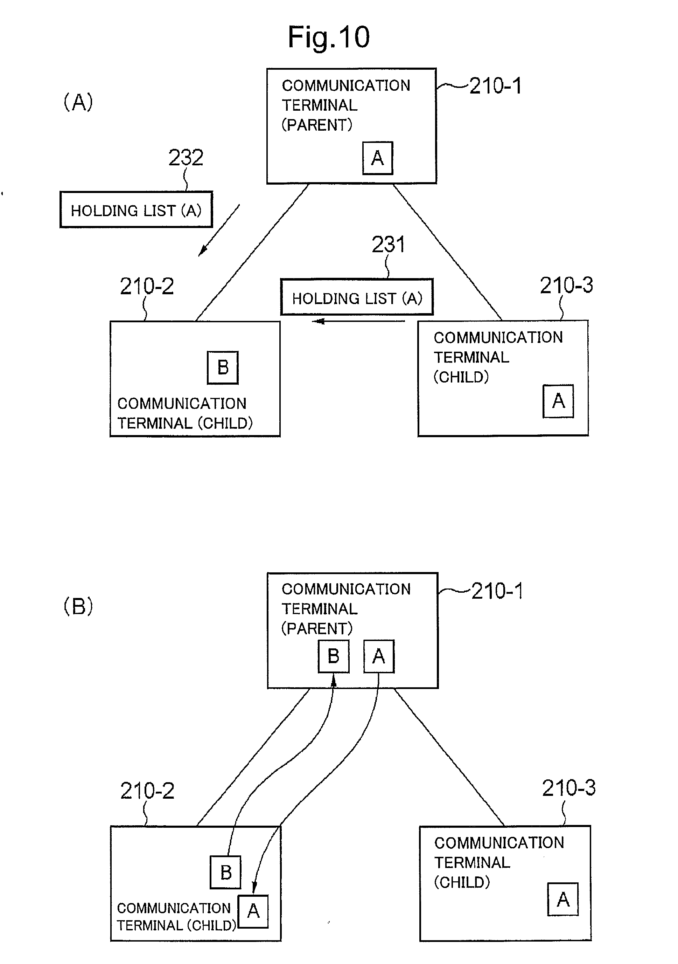

It is assumed that, as illustrated in Fig. 10(A), a parent communication terminal 210-1 and a child communication terminal 210-3 hold data A, and a child communication terminal 210-2 holds data B. It is assumed that, in this situation, the communication terminal 210-2 receives a holding list 231 from the communication terminal 210-3 and, immediately thereafter, receives a holding list 232 from the parent communication terminal 210-1.

The communication terminal 210-2 temporarily stores the holding lists 231 and 232 received in succession into the holding list storage unit 216. Then, the communication terminal 210-2, because of being a child communication terminal, preferentially selects the holding list 232 of the parent communication terminal 210-1 from the holding list storage unit 216. Then, the communication terminal 210-2 transmits and receives communication messages to and from the communication terminal 210-1 that is a transmission source of the selected holding list 232 so that data sharing is performed. As a result, as illustrated in Fig. 10(B), the communication terminal 210-2 acquires the data A not present in the own communication terminal from the communication terminal 210-1 by the pull-type data exchange method. Further, the communication terminal 210-2 provides the data B not present in the communication terminal 210-1 for the communication terminal 210-1 by the push-type data exchange method. In contrast, in case of the communication terminal 210-2 selects the holding list 231 received earlier and performs acquisition of the data A and provision of the data B with the communication terminal 210-3 that is a transmission source of the selected holding list 231, two-hop communication is respectively needed.

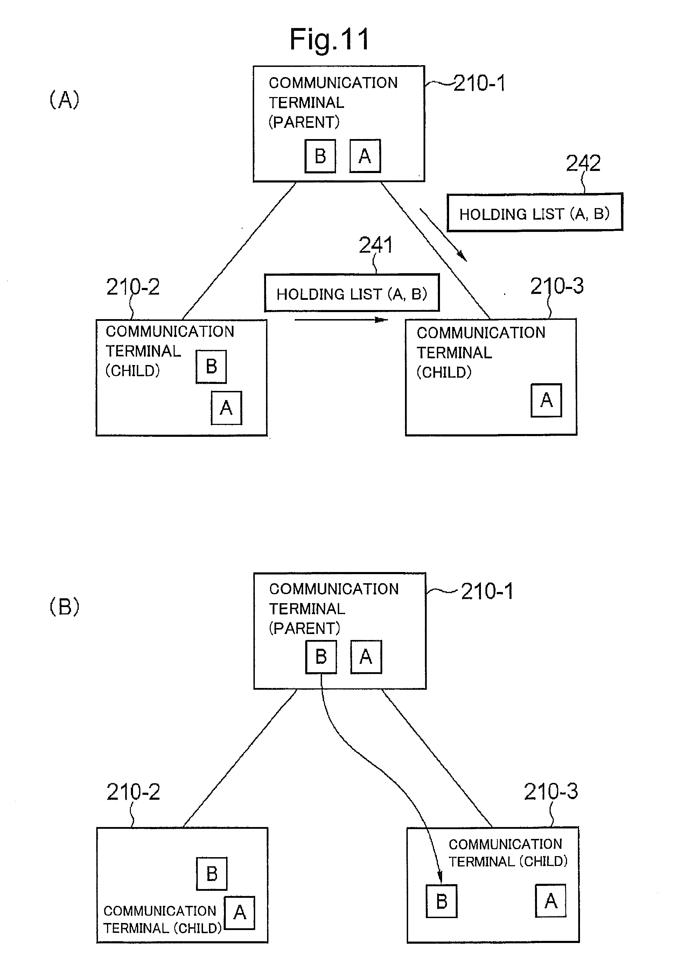

Further, it is assumed that, as illustrated in Fig. 11(A), the parent communication terminal 210-1 and the child communication terminal 210-2 hold data A and B and the child communication terminal 210-3 holds the data A. It is assumed that, in this situation, the communication terminal 210-3 receives a holding list 241 from the communication terminal 210-2 and, immediately thereafter, receives a holding list 242 from the parent communication terminal 210-1.

The communication terminal 210-3 temporarily stores the holding lists 241 and 242 received in succession into the holding list storage unit 216. Then, the communication terminal 210-3, because of being a child communication terminal, preferentially selects the holding list 242 of the parent communication terminal 210-1 from the holding list storage unit 216. Then, the communication terminal 210-3 transmits and receives communication messages to and from the communication terminal 210-1 that is a transmission source of the selected holding list 242 so as to perform data exchange. As a result, as illustrated in Fig. 11(B), the communication terminal 210-3 acquires the data B not present in the own communication terminal from the communication terminal 210-1 by the pull-type data exchange method. In contrast, in case of the communication terminal 210-3 selects the holding list 241 received earlier and acquires the data B from the communication terminal 210-2 that is a transmission source of the selected holding list 241, two-hop communication is needed.

Thus, according to the present exemplary embodiment, an effect similar to the second exemplary embodiment can be obtained, and data exchange can be efficiently carried out. A reason for this is that data transmitted and received between communication terminals by using the push-type data exchange method and the pull-type data exchange method are limited to data to be shared between the communication terminals and there is no unnecessary operation that data not to be shared between the communication terminals are transmitted and received between the communication terminals.

### [Third Embodiment]

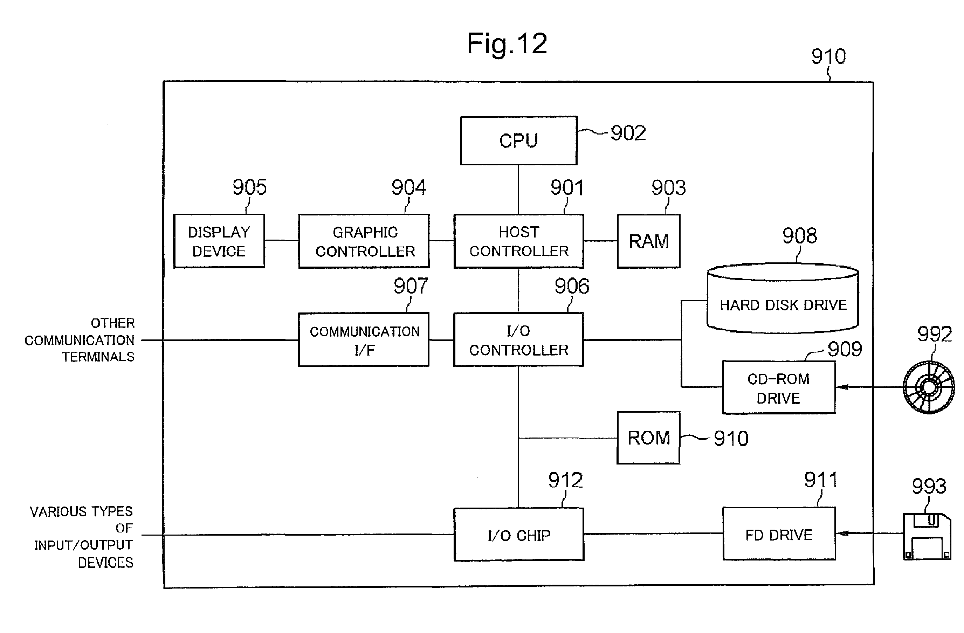

Fig. 12 illustrates an example of a hardware configuration in a case that a communication terminal in each of the aforementioned exemplary embodiments is configured by an electronic information processing apparatus such as a computer. A communication terminal 910 in this example includes a CPU (Central Processing Unit) peripheral unit, an input/output unit, and a legacy input/output unit. The CPU peripheral unit includes a CPU 902, a RAM (Random Access Memory) 903, a graphic controller 904, and a display device 905 that are interconnected by a host controller 901. The input/output unit includes a communication interface 907, a hard disk drive 908, and a CD-ROM (Compact Disk Read Only Memory) drive 909 that are connected to the host controller 901 through an input/output controller 906. The legacy input/output unit includes a ROM (Read Only Memory) 910, a flexible disk drive 911, and an input/output chip 912 that are connected to the input/output controller 906.

The host controller 901 connects the CPU 902 and the graphic controller 904 that access the RAM 903 at a high transfer rate, and the RAM 903. The CPU 902 operates to control each unit based on a program stored in the ROM 910 and the RAM 903. The graphic controller 904 acquires image data generated on a frame buffer provided within the RAM 903 by the CPU 902 and the like, and displays the image data on the display device 905. Alternatively, the graphic controller 904 may contain therein a frame buffer that stores image data generated by the CPU 902 and the like.

The input/output controller 906 connects the host controller 901 with the hard disk drive 908, the communication interface 907, and the CD-ROM drive 909 , that are relatively high-speed input/output devices. The hard disk drive 908 stores a program and data that the CPU 902 uses. The communication interface 907 connects to other communication terminals 320 to transmit and receive a program or data. The CD-ROM drive 909 reads a program or data from a CD-ROM 992, and provides the program or data for the hard disk drive 908 and the communication interface 907 via the RAM 903.

The ROM 910 and relatively low-speed input/output devices, including the flexible disk drive 911 and the input/output chip 912, are connected to the input/output controller 906. The ROM 910 stores a boot program that the communication terminal 310 executes at the time of start-up, a program that depends on hardware of the communication terminal 310, or the like. The flexible disk drive 911 reads a program or data from a flexible disk 993, and provides the program or data for the hard disk drive 908 and the communication interface 907 via the RAM 903. The input/output chip 912 connects to the flexible disk drive 911, or various types of input/output devices via a parallel port, a serial port, a keyboard port, a mouse port, or the like.

The program that the CPU 902 executes is stored on a recording medium, such as the flexible disk 993, the CD-ROM 992, and an IC (Integrated Circuit) card, and provided by a user. The program stored on the recording medium may be compressed or non-compressed. The program is installed on the hard disk drive 908 from the recording medium, read out onto the RAM 903, and executed by the CPU 902. The program executed by the CPU 902 causes the communication terminal 910 to function as the communication unit, the data storage unit, the holding list transmission unit, the data exchange unit, and the like in each of the exemplary embodiments described above.

The program described above may be stored on an external storage medium. As for the storage medium, it is possible to use, besides the flexible disk 993 and the CD-ROM 992, an optical recording medium, such as a DVD (Digital Versatile Disk) and a PD (Phase Disk), a magneto-optical recording medium, such as an MD (MiniDisk), a tape medium, a semiconductor memory such as an IC card, and the like. Further, an information sharing system may be provided as a program acquired via a network, by using a storage medium, such as a hard disk and a RAM, provided in a server system connected to a dedicated communication network or the Internet, as a recording medium.

### [Other Embodiments]

While the present invention has been described with reference to several exemplary embodiments, the present invention is not limited to the aforementioned exemplary embodiments only, but various types of other additions and changes can be made. For example, exemplary embodiments as described below are also included in the present invention.

According to the second exemplary embodiment, each communication terminal has functions of both the push-type data exchange method and the pull-type data exchange method. However, the present invention is not limited to such a case, but it suffices that each communication terminal has a function of at least one of the push-type data exchange method and the pull-type data exchange method.

This application is based upon and claims the benefit of priority from Japanese patent application No. 2013-032835, filed on February 22, 2013, the disclosure of which is incorporated herein in its entirety by reference.

### [Industrial Applicability]

The present invention is applicable to a data sharing system that performs sharing of data, such as various types of content, between on-board communication terminals on vehicles such as automobiles, or between portable communication terminals.

### [Reference Signs List]

- 100: Data sharing system
- 110: Communication terminal
- 120: Communication network

## Claims

1. A data sharing system in which data are shared between a plurality of communication terminals connected to a communication network in which, of the plurality of communication terminals, one of the communication terminals functions as a parent that has a relay function and the other communication terminals function as children that do not have the relay function, and transmitting and receiving of a communication message between the child communication terminals are performed via the parent,
each of the communication terminals comprising:
a communication unit that stores information related to the parent and controls enabling/disabling of the relay function of the own communication terminal in accordance with the stored parent-related information;
a data storage unit that stores one or more pieces of data;
a holding list transmission unit that transmits a holding list that lists information about data stored in the data storage unit to another of the communication terminals through use of the communication message; and
a data exchange unit that includes a holding list storage unit that temporarily stores the holding list received from another of the communication terminals, refers to the parent-related information in the communication unit, preferentially selects, while the own communication terminal does not function as the parent, the holding list that does not match the holding list of the own communication terminal and whose transmission source is the parent communication terminal, among the holding lists stored in the holding list storage unit, selects, while the own communication terminal functions as the parent, any of the holding lists that do not match the holding list of the own communication terminal among the holding lists stored in the holding list storage unit, and transmits and receives the communication message to and from the other communication terminal that is a transmission source of the selected holding list so that data sharing is performed.

2. The data sharing system according to Claim 1, wherein
the data exchange unit, in sharing the data by transmitting and receiving the communication message, transmits the communication message that requests data that the own communication terminal does not hold, to the other communication terminal that is a transmission source of the holding list, and receives the data transmitted through use of the communication message from the other communication terminal that is the request destination.

3. The data sharing system according to Claim 1 or 2, wherein
the data exchange unit, in sharing the data by transmitting and receiving the communication message, transmits, to the other communication terminal that is a transmission source of the holding list, data that the other communication terminal does not hold through use of the communication message.

4. The data sharing system according to any one of Claims 1 to 3, wherein
the communication unit determines which one of the communication terminals functions as the parent through negotiation with another of the communication terminals.

5. The data sharing system according to any one of Claims 1 to 4, wherein
the communication network is a communication network that conforms to a Wi-Fi Direct specification.

6. A data sharing method in which data are shared between a plurality of communication terminals connected to a communication network in which, of the plurality of communication terminals, one of the communication terminals functions as a parent that has a relay function and the other communication terminals function as children that do not have the relay function, and transmitting and receiving of a communication message between the child communication terminals are performed via the parent, wherein:
each of the communication terminals transmits a holding list that lists information about data that the own communication terminal holds, to another of the communication terminals through use of the communication message; and
each of the communication terminals temporarily stores the holding list received from another of the communication terminals, preferentially selects, while the own communication terminal does not function as the parent, the holding list that does not match the holding list of the own communication terminal and whose transmission source is the parent communication terminal, among the stored holding lists, selects, while the own communication terminal functions as the parent, any of the holding lists that do not match the holding list of the own communication terminal among the stored holding lists, and transmits and receives the communication message to and from the other communication terminal that is a transmission source of the selected holding list so that data sharing is performed.

7. A communication terminal connected to a communication network in which one communication terminal of a plurality of communication terminals functions as a parent that has a relay function and the other communication terminals function as children that do not have the relay function, and transmitting and receiving of a communication message between the child communication terminals are performed via the parent, the communication terminal comprising:
a communication unit that stores information related to the parent and controls enabling/disabling of the relay function of the own communication terminal in accordance with the stored parent-related information;
a data storage unit that stores one or more pieces of data;
a holding list transmission unit that transmits a holding list that lists information about data stored in the data storage unit, to another of the communication terminals through use of the communication message; and
a data exchange unit that includes a holding list storage unit that temporarily stores the holding list received from another of the communication terminals, refers to the parent-related information in the communication unit, preferentially selects, while the own communication terminal does not function as the parent, the holding list that does not match the holding list of the own communication terminal and whose transmission source is the parent communication terminal, among the holding lists stored in the holding list storage unit, selects, while the own communication terminal functions as the parent, any of the holding lists that do not match the holding list of the own communication terminal among the holding lists stored in the holding list storage unit, and transmits and receives the communication message to and from the other communication terminal that is a transmission source of the selected holding list so that data sharing is performed.

8. The communication terminal according to Claim 7, wherein
the data exchange unit, in sharing the data by transmitting and receiving the communication message, transmits the communication message that requests data that the own communication terminal does not hold, to the other communication terminal that is a transmission source of the holding list, and receives the data transmitted through use of the communication message from the other communication terminal that is the request destination.

9. The communication terminal according to Claim 7 or 8, wherein
the data exchange unit, in sharing the data by transmitting and receiving the communication message, transmits, to the other communication terminal that is a transmission source of the holding list, data that the other communication terminal does not hold, through use of the communication message.

10. The communication terminal according to any one of Claims 7 to 9, wherein
the communication unit determines which one of the communication terminals functions as the parent through negotiation with another of the communication terminals.

11. The communication terminal according to any one of Claims 7 to 10, wherein
the communication network is a communication network that conforms to a Wi-Fi Direct specification.

12. A data sharing method that is executed by a communication terminal connected to a communication network in which, of a plurality of communication terminals, one of the communication terminals functions as a parent that has a relay function and the other communication terminals function as children that do not have the relay function, and transmitting and receiving of a communication message between the child communication terminals are performed via the parent, wherein
the communication terminal:
includes a communication unit that stores information related to the parent and controls enabling/disabling of the relay function of the own communication terminal in accordance with the stored parent-related information, a data storage unit that stores one or more pieces of data, and a holding list storage unit;
receives, from another of the communication terminals, a holding list that lists information about data held by the other communication terminal and temporarily stores the holding list in the holding list storage unit;
refers to the parent-related information of the communication unit, preferentially selects, while the own communication terminal does not function as the parent, the holding list that does not match the holding list of the own communication terminal and whose transmission source is the parent communication terminal, among the holding lists stored in the holding list storage unit, and selects, while the own communication terminal functions as the parent, any of the holding lists that do not match the holding list of the own communication terminal among the holding lists stored in the holding list storage unit; and
transmits and receives the communication message to and from the other communication terminal that is a transmission source of the selected holding list so that data sharing is performed.

13. A program for causing a computer that constitutes a communication terminal connected to a communication network in which, of a plurality of communication terminals, one of the communication terminals functions as a parent that has a relay function and the other communication terminals function as children that do not have the relay function, and transmitting and receiving of a communication message between the child communication terminals are performed via the parent, to function as:
a communication unit that stores information related to the parent and controls enabling/disabling of the relay function of the own communication terminal in accordance with the stored parent-related information;
a data storage unit that stores one or more pieces of data;
a holding list transmission unit that transmits a holding list that lists information about data stored in the data storage unit, to another of the communication terminals through use of the communication message; and
a data exchange unit that includes a holding list storage unit that temporarily stores the holding list received from another of the communication terminals, refers to the parent-related information in the communication unit, preferentially selects, while the own communication terminal does not function as the parent, the holding list that does not match the holding list of the own communication terminal and whose transmission source is the parent communication terminal, among the holding lists stored in the holding list storage unit, selects, while the own communication terminal functions as the parent, any of the holding lists that do not match the holding list of the own communication terminal among the holding lists stored in the holding list storage unit, and transmits and receives the communication message to and from the other communication terminal that is a transmission source of the selected holding list so that data sharing is performed.
